# EUROPÄISCHE PATENTANMELDUNG

(11) **EP 3 492 422 A1**
(43) Veröffentlichungstag der Anmeldung: **05.06.2019**
(21) Anmeldenummer: 18208819.5
(22) Anmeldetag: 28.11.2018
(51) Int. Cl.: B66C 1/42, B66C 1/44, B66C 1/54, B66C 1/10

(54) **HEBEVORRICHTUNG UND VERFAHREN ZUM HEBEN EINER SCHWEREN KOMPONENTE EINER WINDENERGIEANLAGE**

(30) Priorität: 30.11.2017 DE 102017011085
(71) Anmelder: Senvion GmbH, 22297 Hamburg (DE)
(72) Erfinder: Lorbach, Severin, 24114 Kiel (DE)
(74) Vertreter: Glawe, Delfs, Moll

(57) **Zusammenfassung**

Gegenstand der Erfindung sind eine Hebevorrichtung (20) und ein Verfahren zum Heben einer schweren Komponente (10) einer Windenergieanlage, insbesondere eines Nabengusskörpers oder Rotors. Die Hebevorrichtung (20) umfasst eine Ankerstange (21) welche an einem Ende eine Ankerplatte (22) aufweist, ein Laufrohr (24), welches axial verschiebbar auf der Ankerstange (21) angeordnet ist, ein Klemmelement (26), welches an der Ankerplatte (22) gelagert ist und eine Auflagefläche (26a) für die zu hebende Komponente (10) aufweist und ein Verbindungselement (28), welches mit dem Laufrohr (24) und dem Klemmelement (26) jeweils gelenkig verbunden ist. Erfindungsgemäß führt das Klemmelement (26) zwischen einer Ausgangsposition und einer Hebeposition eine Schwenkbewegung in radialer Richtung aus.

## Beschreibung

Hebevorrichtung und Verfahren zum Heben einer schweren Komponente einer Windenergieanlage, insbesondere eines Nabengusskörpers oder Rotors, umfassend eine Ankerstange, welche an einem Ende mindestens eine Ankerplatte aufweist, ein Laufrohr, welches axial verschiebbar auf der Ankerstange angeordnet ist, ein Klemmelement, welches an der Ankerplatte gelagert ist und eine Auflagefläche für die zu hebende Komponente aufweist und ein Verbindungselement, welches mit dem Laufrohr und dem Klemmelement jeweils gelenkig verbunden ist.

Aus dem Stand der Technik sind Hebemittel zum Heben von schweren Komponenten einer Windenergieanlage bekannt, die einem hohen Installations- und Zeitaufwand bedürfen. Zum Teil müssen die aus dem Stand der Technik bekannten Hebemittel fest mit den zu hebenden Komponenten verbunden, beispielsweise verschraubt, werden. Dies ist nicht nur aufwendig und erfordert den Einsatz von Bedienpersonal, sondern es müssen in den Komponenten der Windenergieanlage, zum Beispiel am Nabengusskörper, spezielle Vorrichtungen vorgesehen werden, zum Beispiel Hebeaugen, die ein Verbinden eines Hebemittels mit der Komponente ermöglichen. Das Hebemittel muss also individuell montiert bzw. demontiert werden und es werden für unterschiedliche zu hebende Komponenten unterschiedliche Hebemittel benötigt. Dies erfordert einen enormen Installations- und Zeitaufwand.

Der Erfindung liegt die Aufgabe zugrunde, eine Hebevorrichtung und ein Verfahren zum Heben einer schweren Komponente einer Windenergieanlage vorzustellen, welche ein einfaches und schnelles Verbinden und Lösen zwischen einer Hebevorrichtung und der zu hebenden Komponente ermöglichen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Erfindungsgemäß führt das Klemmelement zwischen einer Ausgangsposition und einer Hebeposition eine radiale Schwenkbewegung aus.

In einer Ausgangsposition befindet sich die Hebevorrichtung in einem lastfreien Zustand und daher nicht in Eingriff mit der zu hebenden Komponente. In der Ausgangsposition kann die Hebevorrichtung transportiert werden und auch auf dafür vorgesehene Füße an der Ankerplatte abgestellt werden. Außerdem hat die Hebevorrichtung in der Ausgangsposition einen geringeren Durchmesser, sodass sie durch eine Öffnung in eine schwere Komponente einer Windenergieanlage eingeführt werden kann.

In einer Hebeposition befindet sich die Hebevorrichtung in Eingriff mit einer zu hebenden schweren Komponente. Die zu hebende Komponente ist in der Hebeposition der Hebevorrichtung durch die Klemmelemente fest eingeklemmt. Die Verbindung zwischen Hebevorrichtung und Komponente ist so stark, dass die Komponente in dieser Position transportiert werden kann.

Durch die radiale Schwenkbewegung der Klemmelemente von der Ausgangsposition in die Hebeposition wird ein einfaches und schnelles Verbinden und Lösen der Hebevorrichtung von der Komponente durch simples Einklemmen ermöglicht. Die Klemmelemente sind an der Ankerplatte gelagert und weisen eine Auflagefläche für die zu hebende Komponente auf. Ein Verschwenken der Klemmelemente und dadurch ein Einklemmen der zu hebenden Komponente erfolgt aufgrund einer Zugkraft, die auf das Laufrohr wirkt. Insbesondere kann daher eine Steuerung der Hebevorrichtung von außerhalb der zu hebenden Komponente erfolgen, beispielsweise durch Rundschlingen, die mit dem Laufrohr in Eingriff stehen. Es ist daher besonders günstig, wenn diese radiale Schwenkbewegung allein aus einer relativen Bewegung zwischen Laufrohr und Ankerstange resultiert.

Vorzugsweise weist die Hebevorrichtung drei im gleichen Winkel zueinander angeordnete Klemmelemente auf. Die Klemmelemente schließen dann jeweils einen Winkel von 120° zueinander ein. Diese Ausführung ermöglicht eine ausgewogene Gewichtsverteilung beim Heben, insbesondere beim Transport von Nabengusskörpern samt Rotoren.

In einer bevorzugten Ausführungsform weist die Hebevorrichtung zwischen dem Laufrohr und dem Verbindungselement einen ersten Verbindungspunkt auf, zwischen dem Verbindungselement und dem Klemmelement einen zweiten Verbindungspunkt und zwischen dem Klemmelement und der Ankerplatte einen dritten Verbindungspunkt. In der Ausgangsposition weist der zweite Verbindungspunkt den größten Abstand zur Ankerstange in radialer Richtung auf. Die Klemmelemente befinden sich in dieser Position in einem eingeklappten bzw. eingeschwenkten Zustand und der Durchmesser der Hebevorrichtung ist insgesamt reduziert gegenüber dem Durchmesser der Hebevorrichtung in Hebeposition.

In der Hebeposition kann der dritte Verbindungspunkt den größten Abstand zur Ankerstange in radialer Richtung aufweisen. In dieser Position befinden sich die Verbindungspunkte nahezu in einer Linie. Das Klemmelement ist in dieser Position so aufgerichtet wie möglich und eine Komponente kann zwischen den Auflageflächen des Klemmelements und der Ankerplatte eingeklemmt werden.

Dazu kann in der Hebeposition die Auflagefläche der Klemmbacke zu einer Auflagefläche an der Ankerplatte im Wesentlichen parallel verlaufen. Weiter vorzugsweise erstrecken sich die Auflageflächen in einer Ebene senkrecht zur Ankerstange.

Gemäß einer bevorzugten Ausführungsform wird in der Hebeposition ein Ringflansch der zu hebenden Komponente zwischen der Auflagefläche des Klemmelements und der Auflagefläche der Ankerplatte eingeklemmt.

Bei der Schwenkbewegung der Klemmelemente kann die Ankerplatte eine Führung für die Bewegung des Klemmelements in radialer Richtung bilden, vorzugsweise rotiert das Klemmelement um den dritten Verbindungspunkt, sodass sich die Auflagefläche für die zu hebende Komponente nach außen bewegt.

Bei einem Übergang der Hebevorrichtung von der Ausgangsposition in die Hebeposition kann das Laufrohr axial entlang der Ankerstange nach oben gleiten. Andersrum gleitet das Laufrohr folglich entlang der Ankerstange nach unten, wenn die Hebevorrichtung von der Hebeposition in die Ausgangsposition überführt wird. Wird die Hebevorrichtung am Laufrohr beispielsweise über Rundschlingen nach oben gezogen, kann eine schwere Komponente fest zwischen dem Klemmelement und der Ankerplatte eingeklemmt werden und so wird es möglich, die Komponente anzuheben und zu transportieren.

Vorzugsweise ist zwischen dem Klemmelement und der Ankerstange ein Federelement angeordnet, welches eine Kraft auf das Klemmelement oberhalb des Verbindungspunkts ausübt. Dadurch wird die Hebevorrichtung bei einem Übergang von der Hebeposition zur Ausgangsposition unterstützt und auch gehalten. Das Federelement ist weiter vorzugsweise direkt auf der Ankerplatte angeordnet, um eine Rotation des Klemmelements um den Verbindungspunkt zwischen Ankerplatte und Klemmelement zu bewirken.

In einer vorteilhaften Ausführungsform der Erfindung ist ein Sperrmechanismus zwischen Ankerstange und Laufrohr vorgesehen. Dieser verhindert in der Ausgangsposition eine Relativbewegung zwischen Ankerstange und Laufrohr. Die Hebevorrichtung kann so durch eine Öffnung in der Komponente abgesenkt werden, ohne dass sie in die Hebeposition übergeht.

Vorzugsweise ist der Sperrmechanismus als Teil der Ankerstange ausgebildet und umfasst einen Sperrklotz, weiter vorzugsweise vier im gleichen Winkel zueinander angeordnete Sperrklötze. Über einen Zughaken kann ein Sperrklotz in radialer Richtung bewegt werden und dadurch von einer Freigabeposition in eine Sperrposition überführt werden.

Es ist ein besonderer Vorteil des Sperrmechanismus, dass dieser über ein Sperrseil von außen betätigt werden kann. Somit wird es möglich, dass die erfindungsgemäße Hebevorrichtung komplett von außen bedient wird und kein zusätzliches Personal innerhalb der Komponente benötigt wird. Dies spart Personalkosten und reduziert die Gefahr von Verletzungen des Bedienpersonals.

Die Erfindung betrifft außerdem ein Verfahren zum Heben einer schweren Komponente, insbesondere eines Nabengusskörpers oder Rotors. Das Verfahren umfasst die folgenden Schritten: Einbringen einer Hebevorrichtung durch eine Öffnung der zu hebenden Komponente, Aufsetzen der Hebevorrichtung auf einen Ringflansch der zu hebenden Komponente, Überführung der Hebevorrichtung von einer Ausgangsposition in eine Hebeposition, wobei ein Klemmelement der Hebevorrichtung eine Schwenkbewegung in radialer Richtung durchführt, Anheben der Hebevorrichtung und der zu hebenden Komponente.

In einer vorteilhaften Ausführungsform weist das Verfahren dazwischen einen weiteren Schritt auf, wonach ein Sperrmechanismus zwischen einem Laufrohr und einer Ankerstange der Hebevorrichtung entriegelt wird. Durch einen Zug an einem Sperrseil können die Sperrklötze des Sperrmechanismus in eine Freigabeposition zurückgezogen werden. Durch den Sperrmechanismus kann die Hebevorrichtung während eines Installationsvorgangs in der Ausgangsposition geführt werden. Die Bedienung des Sperrmechanismus folgt von außen und ebenerdig.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Anordnung einer erfindungsgemäßen Hebevorrichtung, welche über Rundschlingen an einem Kranhaken angebracht ist und senkrecht über einer Öffnung einer zu hebenden schweren Komponente einer Windenergieanlage platziert ist;
- Fig. 2:: eine dreidimensionale Ansicht der erfindungsgemäßen Hebevorrichtung in der Ausgangsposition;
- Fig. 3a:: eine dreidimensionale Ansicht einer erfindungsgemäßen Hebevorrichtung in der Hebeposition;
- Fig. 3b:: eine Explosionszeichnung eines Teils der erfindungsgemäßen Hebevorrichtung aus Fig. 3a;
- Fig. 4:: eine dreidimensionale Darstellung einer bevorzugten Ausführungsform einer erfindungsgemäßen Hebevorrichtung mit einem Sperrmechanismus zwischen Ankerstange und Laufrohr in einer Sperrposition (a) und einer Freigabeposition (b);
- Fig. 5:: eine dreidimensionale Darstellung einer weiteren vorteilhaften Ausführungsform der erfindungsgemäßen Hebevorrichtung in einer Hebeposition, wobei zwischen der Ankerplatte und den Klemmelementen jeweils Federelemente angeordnet sind;
- Fig. 6:: die erfindungsgemäße Hebevorrichtung aus Fig. 5 in einer Ausgangsposition, wobei die Federelemente eine radiale Kraft auf das Klemmelement ausüben;
- Fig. 7:: eine dreidimensionale Ansicht der Hebevorrichtung in der Ausgangsposition gemäß des erfindungsgemäßen Verfahrens zum Heben einer schweren Komponente;
- Fig. 8:: eine dreidimensionale Ansicht gemäß des erfindungsgemäßen Verfahrens in der Hebeposition beim Heben einer schweren Komponente.

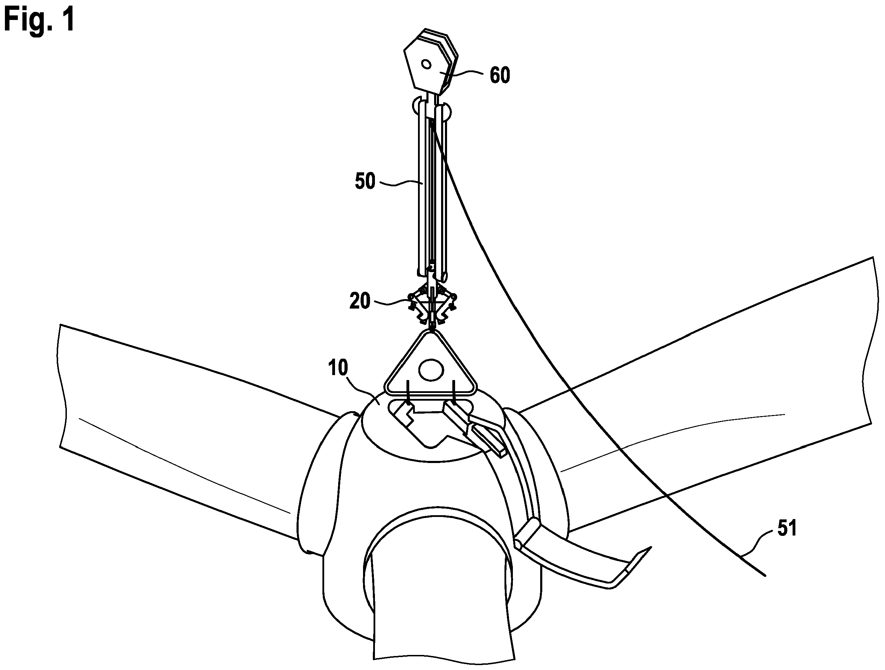

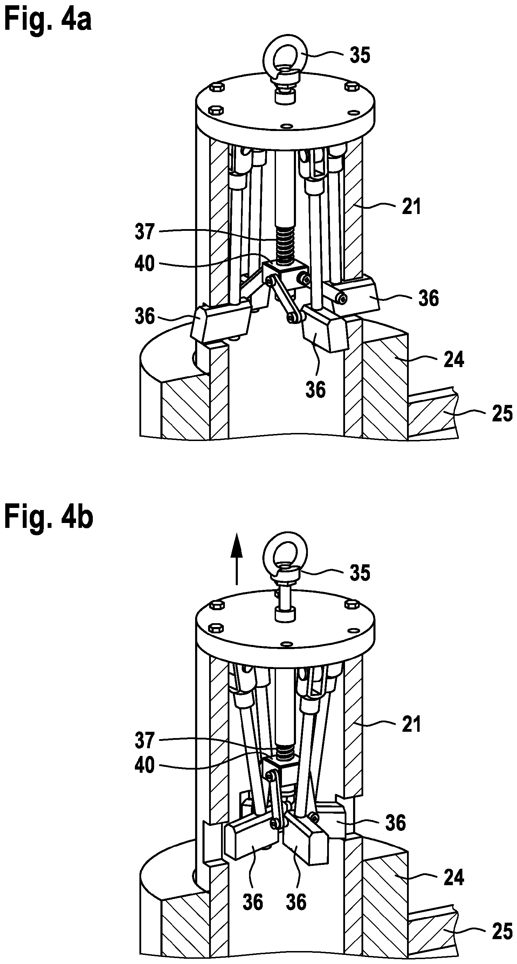

Fig. 1 zeigt eine erfindungsgemäße Hebevorrichtung 20 in der Ausgangsposition bei der Einbringung von oben durch eine Öffnung in einen Nabengusskörper als beispielhafte schwere Komponente einer Windenergieanlage. Die Hebevorrichtung 20 hängt über zwei Rundschlingen 50 an einem Kranhaken 60. Die Rundschlingen 50 greifen um zwei Drehzapfen 25, welche in Form von gegenüberliegenden zylinderförmigen Vorsprüngen mit jeweils einer Endplatte als Teil des Laufrohrs 24 ausgebildet sind. Über ein Steuerseil 51 kann von außerhalb der zu hebenden Komponente eine Sperrvorrichtung bedient werden. Die Einzelheiten der Sperrvorrichtung sind im Zusammenhang mit den Figuren 4a und 4b beschrieben. Mit dieser einfachen Hebekonstruktion können schwere Komponenten 10 einer Windenergieanlage beispielsweise vom Hafenbereich auf ein Transport- oder Installationsschiff geladen werden.

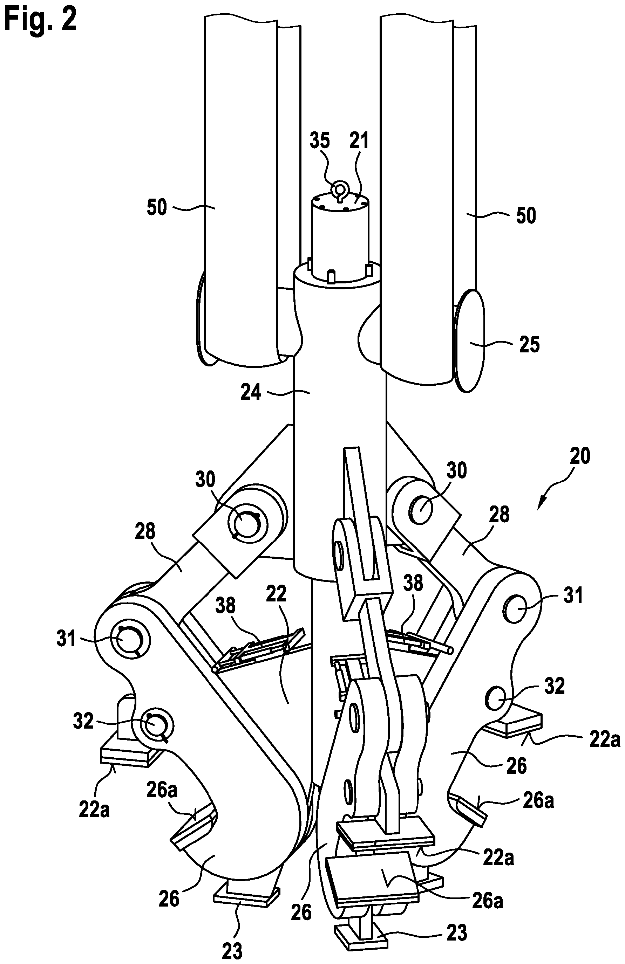

Eine detaillierte Darstellung der Hebevorrichtung 20 in der Ausgangsposition ist in Fig. 2 gezeigt. In der Ausgangsposition befindet sich die Hebevorrichtung nicht in Eingriff mit der zu hebenden Komponente 10. Die Rundschlingen 50 greifen um die Drehzapfen 25 des Laufrohrs 24. Das Laufrohr 24 erstreckt sich um eine Ankerstange 21 und ist auf der Ankerstange 21 axial beweglich gelagert. An dem Laufrohr 24 sind drei Verbindungselemente 28 gelenkig gelagert, welche im gleichen Winkel zueinander, nämlich 120°, um das Laufrohr 24 herum angeordnet sind. Die Verbindungspunkte sind jeweils mit der Bezugsziffer 30 gekennzeichnet. Die Verbindungselemente 28 sind über einen weiteren Verbindungspunkt 31 ebenfalls gelenkig an den Klemmelementen 26 gelagert. Die Klemmelemente 26 sind in Form von Klemmpratzen ausgebildet, welche eine zu hebende Komponente zwischen einer Auflagefläche 26a des Klemmelements 26 und einer Auflagefläche 22a einer Ankerplatte 22 einklemmen können. Dazu sind die Klemmelemente 26 um einen dritten Verbindungspunkt 32 gelenkig an der Ankerplatte 22 gelagert. Die Ankerplatten erstrecken sich somit in einer Ebene mit den Verbindungselementen 28. Die Ankerplatten 22 sind einstückig mit der Ankerstange 21 ausgebildet, wobei sich die Ankerstange 21 durch das Laufrohr 24 erstreckt. Die Auflageflächen 22a sind im Wesentlichen in einer horizontalen Richtung ausgerichtet und bewegen sich bei einem Übergang der Hebevorrichtung von der Ausgangsposition in die Hebeposition nicht. Die Ankerplatten 22 weisen jeweils einen Fuß 23 auf.

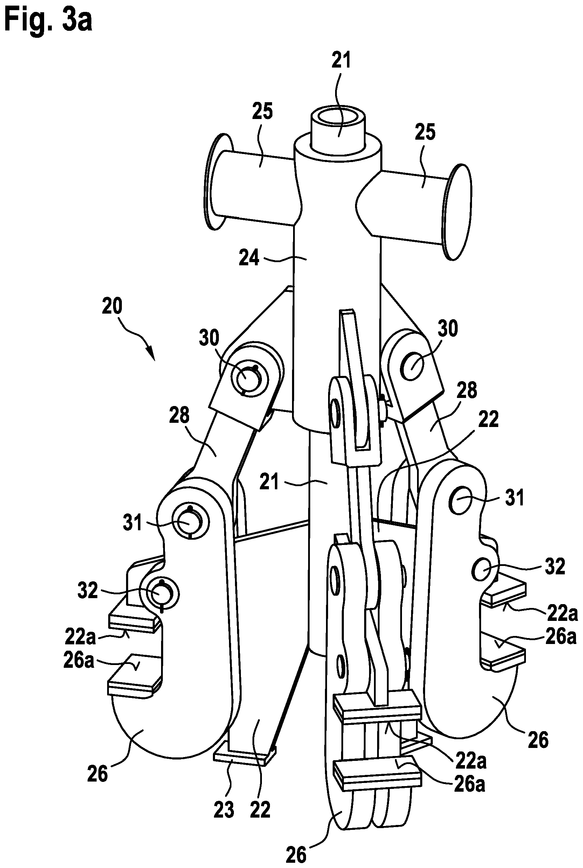

In der Ausgangsposition der Hebevorrichtung 20 weisen die Verbindungspunkte 31 von allen Verbindungspunkten 30, 31, 32 den größten Abstand zur Ankerstange 21 in radialer Richtung auf. Die Klemmelemente 26 sind entlang der jeweiligen Ankerplatte 22, welche als Führung für die Klemmelemente 26 dient, nach innen eingeklappt, sodass die Auflageflächen 26a eine nach außen abfallende Position einnehmen. In der in Fig. 3a gezeigten Hebeposition der Hebevorrichtung 20 befinden sich die Verbindungspunkte 30, 31, 32 nahezu auf einer Geraden, wobei die Verbindungspunkte 32 den größten Abstand zur Ankerstange 21 in radialer Richtung aufweisen. Die Klemmelemente 26 sind in einer aufgerichteten Position, sodass sich die Auflageflächen 26 im Wesentlichen in horizontaler Richtung und damit im Wesentlichen parallel zu den Auflageflächen 22a der Ankerplatten 22 erstrecken.

Ein Übergang der Hebevorrichtung 20 von der Ausgangsposition in die Hebeposition erfolgt über eine axiale Bewegung des Laufrohrs 24 relativ zur Ankerstange 21 nach oben. Dabei werden die Verbindungpunkte 31 unter Aufrichtung der Verbindungselemente 28 nach innen gezogen. Die Klemmelemente 26 rotieren um den Verbindungspunkt 32 und richten sich ebenfalls auf.

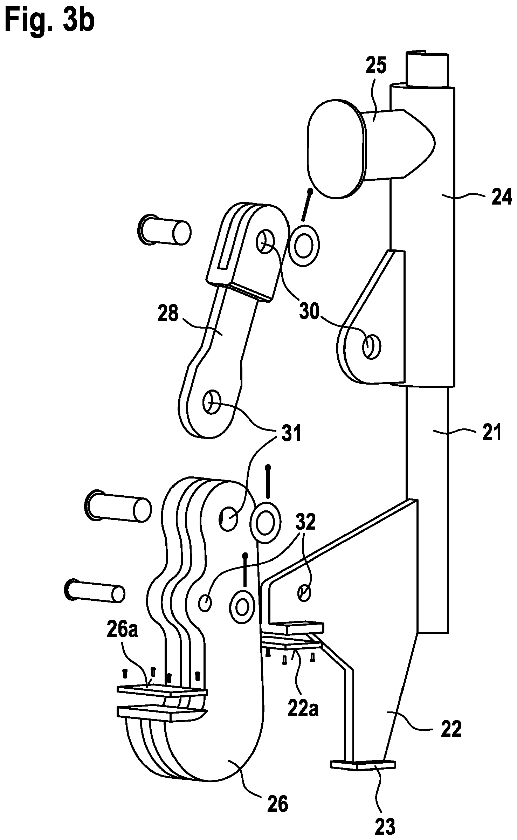

Die strukturelle und funktionale Verbindung zwischen Laufrohr 24, Verbindungselement 28, Klemmelement 26, Ankerplatte 22 und Ankerstange 21 ist exemplarisch in der Explosionszeichnung in Fig. 3b gezeigt. Die Auflageflächen 22a, 26a können aus Fibroflex gefertigt und separat an den Klemmelementen 26 bzw. Ankerplatten 22 befestigt sein.

In Figs. 4a und 4b ist der Sperrmechanismus zwischen Laufrohr 24 und Ankerstange 21 gezeigt. Eine Relativbewegung in axialer Richtung zwischen Laufrohr 24 und Ankerstange 21 wird in der Sperrposition unterbunden, indem sich die Sperrklötze 36 in radial ausgefahrener Position befinden (siehe Fig. 4a). Wird ein Zug auf das Hakenelement 35 ausgeübt (was durch den Pfeil in Fig. 4b angedeutet ist), wird eine damit verbundene Gewindestange nach oben gezogen, wodurch sich eine mit den Sperrklötzen 36 verbundene Mutter 40 nach oben bewegt und die Sperrklötze 36 nach innen zieht. Diese Freigabeposition ist in Fig. 4b gezeigt. Erfolgt eine Zugentlastung des Hakenelements 35, wird die Mutter 40 durch den Druck eines Führungsrohrs zusammen mit einer Feder 37 wieder nach unten gedrückt.

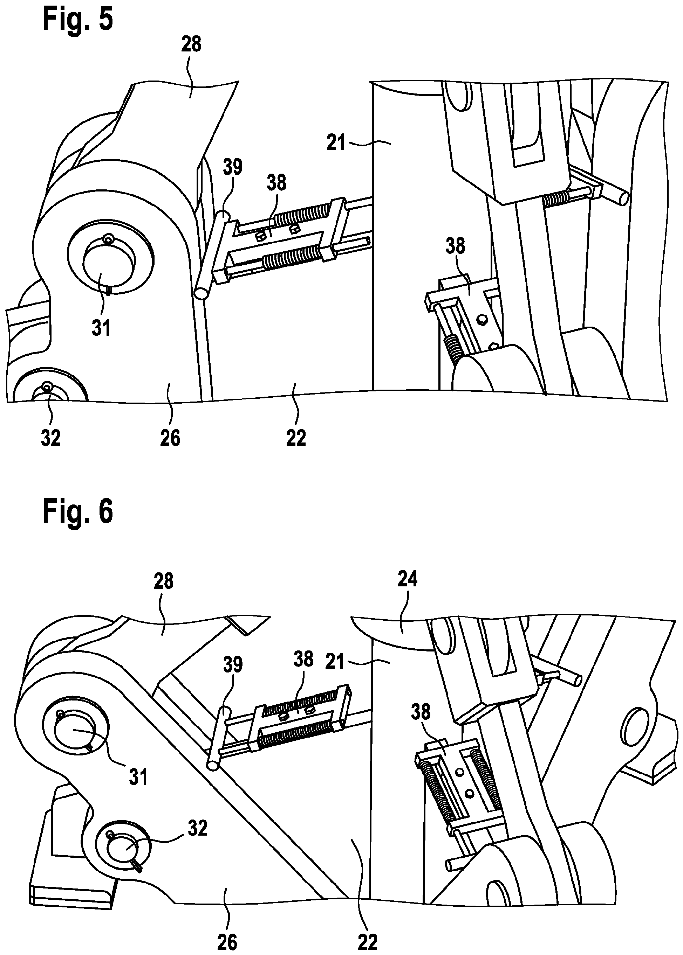

Figs. 5 und 6 zeigen die Funktion der Federelemente 38, welche zwischen Ankerstange 21 einerseits und Klemmelement 26 andererseits jeweils auf der Ankerplatte 22 angeordnet sind. Die Federelemente 39 sind oberhalb des Verbindungspunkts 32 angeordnet, um welche die Klemmelemente 26 jeweils rotieren. Die in Fig. 5 gezeigte Hebevorrichtung 20 befindet sich in Hebeposition. Dabei ist eine Druckstange 39 des unter Spannung befindlichen Federelements 38 zwischen Federelement 38 und Klemmelement 26 eingeklemmt. Die Kraft des Klemmelements 26 ist in Hebeposition so groß, dass die Feder des Federelements 38 zusammengedrückt wird. Bei einem Übergang der Hebevorrichtung 20 von der Hebeposition in die Ausgangsposition (Fig. 6) wirkt das Federelement 38 unterstützend, indem der oberhalb des Rotationspunkts (Verbindungspunkt 32) befindliche Teil des Klemmelements 26 nach außen gedrückt wird und so das Klemmelement 26 einklappt.

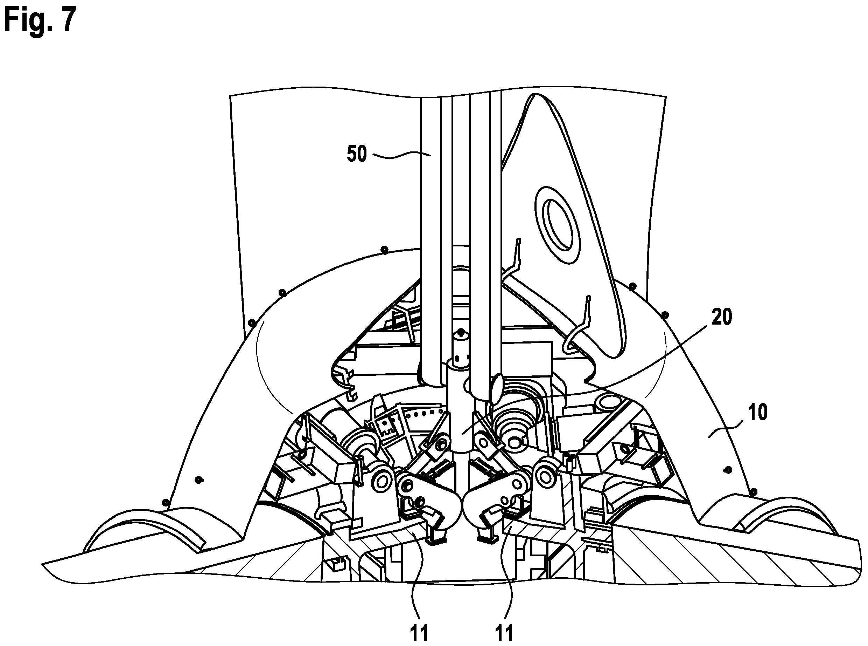

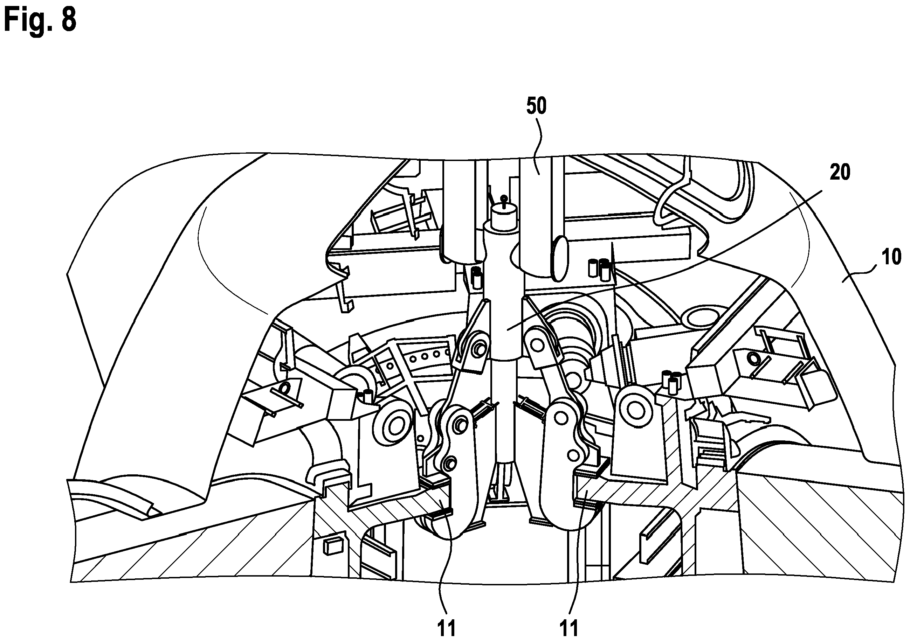

Das Verfahren zum Heben einer schweren Komponente 10 einer Windenergieanlage wird exemplarisch anhand der Figs. 7 und 8 erläutert. Nachdem die Hebevorrichtung 20 durch eine Öffnung in den Nabengusskörper (schwere Komponente 10) eingebracht wurde, setzt die Hebevorrichtung 20 zunächst mit den Kontaktflächen 22a auf einem Ringflansch 11 im Inneren des Nabengusskörpers auf (siehe Fig. 7). Über das Steuerseil 51 (siehe Fig. 1) wird der Sperrmechanismus zwischen Ankerstange 21 und Laufrohr 24 (Fig. 4a und 4b) von außen entriegelt.

Ein Anheben des Laufrohrs 24 über die Rundschlingen 25 führt dazu, dass das Laufrohr 24 axial über die Ankerstange 21 nach oben gleitet. Durch die Relativbewegung zwischen Laufrohr 24 und Ankerstange 21 kommt es zu einer Schwenkbewegung der Klemmelemente 26 in radialer Richtung. Dabei wird der Ringflansch 11 zwischen den Auflageflächen 22a der Ankerplatte 22 und den Auflageflächen 26a der Klemmelemente 26 eingeklemmt. Diese Position der Hebevorrichtung ist als Hebeposition bezeichnet und in Fig. 8 dargestellt. Die schwere Komponente 10 ist nun fest mit der Hebevorrichtung verbunden und kann über die Rundschlingen 50 angehoben und transportiert werden.

Um die Verbindung zwischen der Hebevorrichtung 20 und der Komponente 10 wieder zu lösen, werden die Rundschlingen 25 entlastet und das Laufrohr 24 kann entlang der Ankerstange 21 zurück in die Ausgangsposition gleiten (siehe Fig. 7). Dadurch öffnen sich die Klemmelemente 26, indem sie in radialer Richtung einklappen und die Verbindung zwischen Hebevorrichtung 20 und Ringflansch 11 ist gelöst. Über das Steuerseil 51 kann nun wieder der Sperrmechanismus von außen aktiviert werden oder der Sperrmechanismus ist so konzipiert, dass die Sperrklötze automatisch in die Sperrposition zurückrasten, wodurch eine relative Bewegung zwischen Ankerstange 21 und Laufrohr 24 verhindert wird. Schließlich kann die Hebevorrichtung 20 in diesem Zustand über die Rundschlingen 25 aus dem Inneren der schweren Komponente 10 gehoben werden.

Das erfindungsgemäße Verfahren kann mit weiteren Merkmalen der erfindungsgemäßen Hebevorrichtung 20 ausgebildet werden. Die erfindungsgemäße Hebevorrichtung 20 kann mit weiteren Merkmalen, die im Zusammenhang mit dem erfindungsgemäßen Verfahren beschrieben wurden, weitergebildet werden.

## Patentansprüche

1. Hebevorrichtung (20) zum Heben einer schweren Komponente (10) einer Windenergieanlage, insbesondere eines Nabengusskörpers oder Rotors, umfassend
eine Ankerstange (21), welche an einem Ende eine Ankerplatte (22) aufweist;
ein Laufrohr (24), welches axial verschiebbar auf der Ankerstange (21) angeordnet ist;
ein Klemmelement (26), welches an der Ankerplatte (22) gelagert ist und eine Auflagefläche (26a) für die zu hebende Komponente (10) aufweist;
ein Verbindungselement (28), welches mit dem Laufrohr (24) und dem Klemmelement (26) jeweils gelenkig verbunden ist,
**dadurch gekennzeichnet, dass**
das Klemmelement (26) zwischen einer Ausgangsposition und einer Hebeposition eine Schwenkbewegung in radialer Richtung ausführt.

2. Hebevorrichtung (20) nach Anspruch 1, **dadurch gekennzeichnet, dass** drei im gleichen Winkel zueinander angeordnete Klemmelemente (26) vorgesehen sind.

3. Hebevorrichtung (20) nach einem der vorstehenden Ansprüche, **dadurch gekennzeichnet, dass** zwischen dem Laufrohr (24) und dem Verbindungselement (28) ein erster Verbindungspunkt (30), zwischen dem Verbindungselement (28) und dem Klemmelement (26) ein zweiter Verbindungspunkt (31) und zwischen dem Klemmelement und der Ankerplatte (22) ein dritter Verbindungspunkt (32) angeordnet ist, wobei in der Ausgangsposition der zweite Verbindungspunkt (31) den größten Abstand zur Ankerstange (21) in radialer Richtung aufweist.

4. Hebevorrichtung (20) nach Anspruch 3, **dadurch gekennzeichnet, dass** in der Hebeposition der dritte Verbindungspunkt (32) den größten Abstand zur Ankerstange (21) in radialer Richtung aufweist.

5. Hebevorrichtung (20) nach einem der vorstehenden Ansprüche, **dadurch gekennzeichnet, dass** in der Hebeposition die Auflagefläche (26a) zu einer Auflagefläche (22a) an der Ankerplatte (22) im Wesentlichen parallel verläuft.

6. Hebevorrichtung (20) nach einem der vorstehenden Ansprüche, **dadurch gekennzeichnet, dass** in der Hebeposition ein Ringflansch (11) der zu hebenden Komponente (10) zwischen der Auflagefläche (26a) des Klemmelements (26) und der Auflagefläche (22a) der Ankerplatte (22) eingeklemmt ist.

7. Hebevorrichtung (20) nach einem der vorstehenden Ansprüche, **dadurch gekennzeichnet, dass** die Ankerplatte (22) eine Führung für die Schwenkbewegung des Klemmelements (26) in radialer Richtung bildet, vorzugsweise rotiert das Klemmelement (26) um den dritten Verbindungspunkt (32), sodass sich die Auflagefläche (26a) nach außen bewegt.

8. Hebevorrichtung (20) nach einem der vorstehenden Ansprüche, **dadurch gekennzeichnet, dass** das Laufrohr (24) bei einem Übergang von der Ausgangsposition in die Hebeposition axial entlang der Ankerstange (21) nach oben gleitet.

9. Hebevorrichtung (20) nach einem der vorstehenden Ansprüche, **dadurch gekennzeichnet, dass** zwischen dem Klemmelement (26) und der Ankerstange ein Federelement (38) angeordnet ist, welches eine Kraft auf das Klemmelement (26) oberhalb des Verbindungspunkts (32) ausübt, vorzugsweise ist das Federelement (38) auf der Ankerplatte (22) angeordnet.

10. Hebevorrichtung (20) nach einem der vorstehenden Ansprüche, **dadurch gekennzeichnet, dass** ein Sperrmechanismus zwischen Ankerstange (21) und Laufrohr (24) vorgesehen ist, welcher in der Ausgangsposition eine Relativbewegung zwischen Ankerstange (21) und Laufrohr (24) verhindert.

11. Hebevorrichtung (20) nach Anspruch 10, **dadurch gekennzeichnet, dass** der Sperrmechanismus als Teil der Ankerstange (21) ausgebildet ist und einen Sperrklotz (36) umfasst, welcher sich in radialer Richtung von einer Freigabeposition in eine Sperrposition bewegen lässt.

12. Hebevorrichtung (20) nach einem der Ansprüche 10 oder 11, **dadurch gekennzeichnet, dass** der Sperrmechanismus über ein Sperrseil (51) betätigt wird.

13. Verfahren zum Heben einer schweren Komponente (10) einer Windenergieanlage, insbesondere eines Nabengusskörpers oder Rotors mit den folgenden Schritten:
a. Einbringen einer Hebevorrichtung (20) durch eine Öffnung der zu hebenden Komponente (10);
b. Aufsetzen der Hebevorrichtung auf einen Ringflansch (11) der zu hebenden Komponente (10);
c. Überführung der Hebevorrichtung (20) von einer Ausgangsposition in eine Hebeposition, wobei ein Klemmelement der Hebevorrichtung (20) eine Schwenkbewegung in radialer Richtung durchführt;
d. Anheben der Hebevorrichtung (20) und der zu hebenden Komponente (10).

14. Verfahren nach Anspruch 13, **dadurch gekennzeichnet, dass** zwischen den Schritten b. und c. ein Sperrmechanismus entriegelt wird, wobei ein Sperrklotz 36 in eine Freigabeposition bewegt wird.
